# DEMANDE DE BREVET EUROPEEN

(11) **EP 4 687 309 A1**
(43) Date de publication de la demande: **04.02.2026**
(21) Numéro de dépôt: 25192708.3
(22) Date de dépôt: 30.07.2025
(51) Int. Cl.: H04B 7/185

(54) **PROCÉDÉ DE POINTAGE D'UN TERMINAL SATCOM VERS UN SATELLITE D'UN RÉSEAU DE COMMUNICATION CELLULAIRE NON-TERRESTRE**

(30) Priorité: 30.07.2024 FR 2408424
(71) Demandeur: THALES, 92190 Meudon (FR)
(72) Inventeur: SOULIÉ, Antoine, 92622 GENNEVILLIERS CEDEX (FR); SOUMPHOLPHAKDY, Viphakone, 92622 GENNEVILLIERS CEDEX (FR); FELTRIN, Eros, 92622 GENNEVILLIERS CEDEX (FR)
(74) Mandataire: Lavoix

(57) **Abrégé**

Ce procédé de pointage consiste à : générer par le satellite défilant (20) un flux de balise à partir d'une donnée de référence partagée avec le terminal (10) ; transmettre un signal 5G NTN, par le satellite défilant, en intégrant le flux de balise dans des blocs radio physiques de balise prédéfinis ; récevoir par le terminal le signal émis ; extraire, par le terminal, des données binaires des blocs radio physiques de balise ; calculer une estimation de la données de référence à partir desdites données binaires ; calculer une grandeur instantanée correspondant à l'erreur entre l'estimation de la données de référence et la donnée de référence ; et piloter le faisceau (61) d'une antenne (60) du terminal en tenant compte de ladite grandeur instantanée.

## Description

L'invention a pour domaine celui des procédés de pointage du faisceau d'une antenne à balayage mécanique ou électronique d'un terminal SATCOM vers un satellite défilant d'un réseau de télécommunication cellulaire non-terrestre - NTN (« Non-Terrestrial Network ») utilisant la technologie de 5^{e} génération - 5G, le satellite défilant embarquant une charge utile régénérative.

Le 3GPP (« 3rd Generation Partnership Project ») produit des normes définissant les besoins, les architectures et les procédures de fonctionnement des réseaux de télécommunication cellulaire.

Si les premiers éléments normatifs en relation avec des réseaux non-terrestres ont été définis dans la version 17 de la norme 5G (« Release 17 », complétée en juin 2022), le travail normatif se poursuit.

Ont ainsi été publiés les spécifications techniques 3GPP TS 38.300 et 3GPP TS 23.501, ainsi que les rapports techniques 3GPP TR 23.700-28, 3GPP TR 23.700-29, 3GPP TR 23.737, 3GPP TR 38.821.

Les dernières conclusions de ces études seront intégrées à la version 19 de la norme 5G, qui devraient être publiée en juin 2026.

Ces études proposent notamment une architecture d'un réseau 5G NTN dans laquelle tout ou partie d'une station de base (aussi dénommée gNode-B ou gNB) d'un réseau d'accès radio - RAN (« Radio Access Network ») est embarquée dans la charge utile d'un satellite et participe au traitement des paquets de données. On parle alors d'architecture régénérative. Le réseau 5G NTN régénératif peut réduire le nombre de stations sol et aussi fournir des services de connectivité avec des débits plus élevés qu'un réseau 5G NTN qui utiliserait les satellites uniquement pour retransmettre les paquets de données de manière transparente.

L'architecture régénérative utilise la flexibilité de l'architecture NG-RAN qui autorise différentes options de désagrégation d'un gNB de part et d'autre d'une interface normalisée. Par exemple, dans une séparation dite « couche haute » du gNB (« Higher Layer Split » ou HLS), telle que spécifiée dans 3GPP TS 38.401, un gNB est constitué d'une unité haute, gNB-CU, et d'une unité basse gNB-DU, et l'interface entre gNB-CU et gNB-DU est dénommée interface F1.

Avec une telle séparation du gNB, les couches protocolaires associées à l'unité basse du gNB sont mises en œuvre par la charge utile embarquée à bord d'un satellite et couches protocolaires de l'unité haute du gNB sont dans une station au sol.

A partir de la station au sol, l'unité haute du gNB se connecte à un cœur de réseau 5G - CN (« Core Network »), comportant par exemple une passerelle vers un réseau public, comme l'Internet.

Un terminal SATCOM est un équipement utilisateur au sens de la 5G, qui est pourvu d'une antenne directive, c'est-à-dire dont le faisceau peut être orienté soit mécaniquement, soit électroniquement, pour pouvoir suivre le mouvement de défilement d'un satellite d'une constellation de satellites non géostationnaires, en orbite basse - LEO (« Low Earth Orbit ») et/ou en orbite moyenne - MEO (« Medium Earth Orbit »). Dans ce qui suit on parlera simplement de satellite LEO pour désigner un satellite défilant d'une constellation LEO et/ou MEO.

En raison d'une haute directivité et d'un faisceau très fin, un terminal SATCOM doit être en mesure de pointer très précisément vers le satellite avec lequel il communique. Dans le cas d'un satellite LEO, le terminal doit poursuivre de manière continue le satellite LEO au fur et à mesure de son mouvement, et asservir le pointage de son antenne en conséquence. Un terminal SATCOM mobile doit en outre compenser ses mouvements afin de garder la visée la plus précise possible vers le satellite LEO.

En outre, un satellite LEO peut mettre en œuvre une technique de commutation de couverture (« beam-hopping » en anglais). Selon cette technique, le satellite LEO couvre une multitude de zones géographiques au sol (« spots » en anglais) selon un cycle temporel, de tel sorte qu'un spot au sol est servi par le satellite LEO au moins une fois par cycle.

Le pointage du terminal SATCOM est en général assuré par une unité de contrôle d'antenne - ACU (« Antenna Control Unit ») qui asservit le pointage de l'antenne à la réception d'un signal de référence, dénommé balise (« beacon »), qui est transmis en permanence par le satellite LEO.

Après sélection d'un satellite LEO vers lequel pointer, une phase de recherche de ce satellite LEO est mise en œuvre, au cours de laquelle l'ACU utilise des informations élémentaires (comme la position géographique du terminal SATCOM, les éphémérides des satellites, etc.), pour estimer grossièrement la position attendue du satellite LEO.

L'ACU commande le pointage du faisceau de l'antenne vers la position attendue et cherche ensuite le satellite LEO en mesurant les variations de niveau de puissance en réception de la balise émise par ce satellite LEO pour différentes directions de pointage autour de la position attendue du satellite LEO.

Une fois le satellite LEO trouvé et confirmé à travers le décodage des informations contenues dans le signal de balise émis par le satellite LEO, le terminal optimise son pointage en maximisant le niveau de puissance de ce signal de balise.

L'ACU rentre alors dans la phase de poursuite afin de maintenir la visée vers le satellite LEO. Cette phase de poursuite met par exemple en œuvre une technique de balayage conique (« conical scan »), qui permet de garder le faisceau de l'antenne centré sur une direction de pointage où la réception de la balise émise par le satellite LEO est optimisée.

La balise peut prendre la forme d'un signal permanent en bande étroite (ou encore une porteuse non modulée) permettant une mesure rapide et précise de son niveau de puissance par le terminal. La balise doit alors présenter une fréquence suffisamment éloignée de la bande de fréquence dans laquelle les communications ont lieu pour que la réception de cette balise ne perturbe pas les communications, ni que les communications interfèrent sur la mesure de la balise.

En variante, la balise dérive du signal de trafic en réception, lorsque celui-ci utilise une porteuse modulée avec enveloppe de puissance quasi-constante. Le terminal est équipé d'un récepteur permettant instantanément d'estimer approximativement le niveau de puissance du signal de trafic afin d'estimer, de façon plus précise mais plus lente, la qualité du signal reçu, information qui est utilisée dans l'optimisation du pointage et la poursuite du satellite.

Cependant, l'utilisation d'une balise à bande étroite dans une constellation de satellites défilants nécessite de munir chaque satellite de la constellation, d'une chaine RF dédiée à l'émission de cette balise, ainsi que d'une antenne dédiée (à grande ouverture) permettant la diffusion de cette balise. Cette chaine RF occupe de l'espace à bord du satellite et consomme une fraction de la puissance disponible à bord du satellite, et qui n'est alors plus disponible pour les transmissions.

De plus, chaque satellite doit disposer d'une balise caractérisée par une fréquence distincte de celle des satellites voisins. En effet, puisque les satellites sont présents sur plusieurs plans orbitaux, les satellites de plan disjoints peuvent apparaitre proches le long de l'axe de visée du terminal SATCOM. Un satellite doit donc disposer d'une fréquence unique et distincte de celle des satellites voisins. Cette caractéristique engendre une consommation importante des ressources spectrales juste pour l'émission des balises.

Par ailleurs, l'utilisation du signal de trafic sur le lien descendant en tant que balise impose une enveloppe de puissance suffisamment stable, limitant le choix des formes d'onde. Ceci est bien adapté au standard de diffusion vidéo numérique - DVB (« Digital Video Broadcasting ») ou à ses équivalents, mais pas au standard de télécommunication 5G. Or le standard DVB (S2X en lien descendant et RCS2 en lien montant) n'est pas optimisé pour un emploi dans une constellations défilante LEO et/ou MEO, au contraire du standard 5G NTM qui est par conséquent mis en œuvre.

Quelle que soit la nature de la balise, ces approches fondées sur un signal de balise reçu continument par le terminal ne sont pas compatibles de la mise en œuvre d'une forme d'onde 5G NTN qui est par nature discontinue.

Cela l'est encore moins lorsqu'une technique de « beam hopping » est en plus mise en œuvre et qu'un spot n'est servi que de manière intermittente.

En effet, le terminal SATCOM au sol ne recevrait la balise que pendant le court laps de temps où le spot à l'intérieur duquel il se trouve est éclairé par le faisceau du satellite LEO. Or ce laps de temps est trop court pour que le terminal reçoive suffisamment d'énergie pour localiser précisément le satellite LEO.

Il serait donc souhaitable de pouvoir éliminer les inconvénients de l'art antérieur en s'affranchissant d'une chaine RF, d'un canal dédié par satellite ou d'une forme d'onde insuffisamment flexible, tout en étant compatible avec la forme d'onde du standard 5G NTN, tout en permettant avantageusement la mise en œuvre d'une technique de beam-hopping.

Le but de la présente invention est de répondre à ce problème.

Par ailleurs, on connait les documents EP 4 123 921 A1, WO 2023/010572 A1 et US 9 853 356 B2.

L'invention a donc pour objet un procédé de pointage d'un terminal SATCOM vers un satellite défilant, une charge utile régénérative d'un satellite défilant, et un terminal SATCOM selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
La figure 1 est une représentation schématique d'un mode de réalisation d'un système pour la mise en œuvre du procédé de pointage selon l'invention ; et,
La figure 2 est une représentation schématique d'une trame émise par un satellite LEO du système de la figure 1 éclairant un spot particulier au sol ;
La figure 3 est une représentation schématique sous forme de blocs d'un mode de réalisation d'un procédé de pointage selon l'invention ; et,

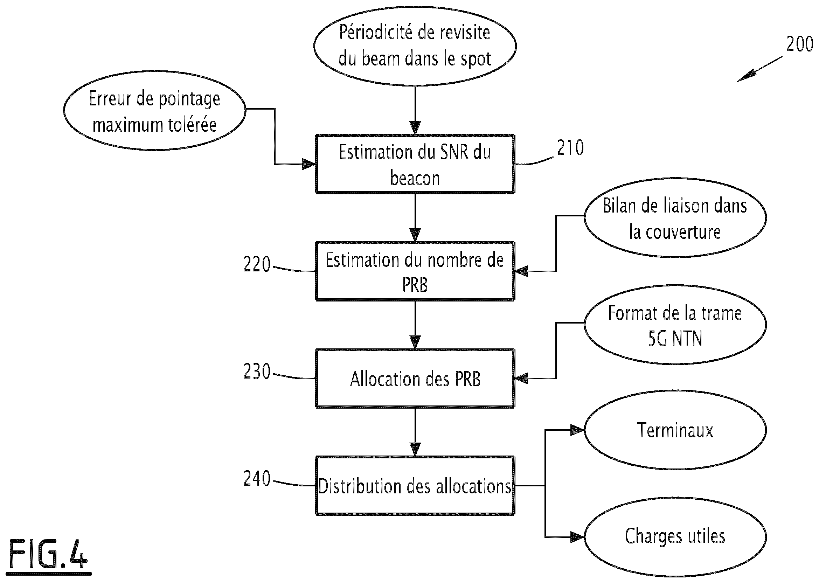

La figure 4 est une représentation schématique sous forme de blocs d'un mode de réalisation d'un procédé de planification selon l'invention.

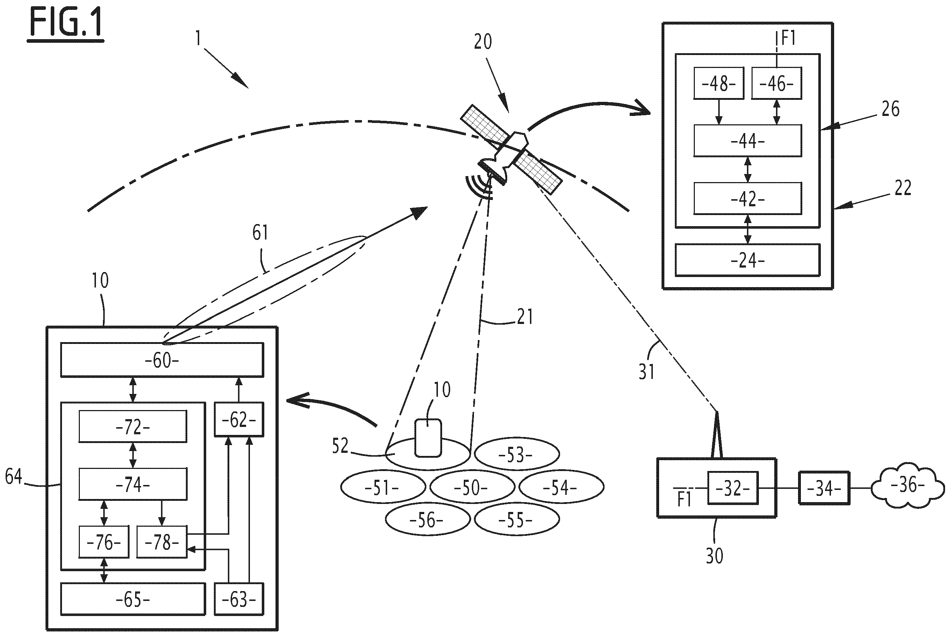

Comme illustré sur la figure 1, le système 1 comporte un terminal SATCOM 10 et un satellite LEO 20 d'une constellation défilante du type LEO et/ou MEO.

Le satellite LEO 20 embarque une charge utile 22 régénérative. Dit autrement, la charge utilise 22 comporte, outre des moyens antennaires 24, une unité basse 26 d'une station de base gNB désagrégée, l'unité haute 32 de la station de base GNB désagrégée étant au sol, par exemple dans une station au sol 30.

La constellation est connectée à la station au sol 30 par un lien 31 dit d'alimentation (« Feeder »), issue du satellite LEO 20 ou d'un autre satellite de la constellation avec lequel le satellite LEO 20 est relié.

L'unité haute 32 est connectée à un réseau coeur 5G - CN (« Core Network ») 34. Le CN 34 est par exemple connecté à un réseau public comme l'internet 36.

Selon l'invention, la charge utile 22 du satellite LEO 20 est modifiée de manière à mettre en œuvre un procédé de transmission spécifique.

L'unité basse 26 de la charge utile 22 comporte, de manière classique, une couche physique 42, une couche MAC 44 et une couche RLC 46.

Selon l'invention, l'unité basse 26 comporte en outre un générateur de balise 48.

Avantageusement, le satellite LEO 30 met en œuvre une technique de beam-hopping. Le faisceau 21 du satellite LEO 30 couvre une multitude de zones géographiques au sol (« spots » en anglais). Ces spots sont référencés 50 à 56 sur la figure 1.

Les spots sont desservis selon un plan répété cycliquement dans le temps. Les spots sont par exemple desservis successivement au cours d'un cycle. Un spot est servi par le satellite LEO au moins une fois par cycle.

Ainsi, dans le signal émis par le satellite LEO 20 au cours d'un cycle, au moins un créneau temporel est dédié à un sport particulier, par exemple le spot 52 à l'intérieur duquel se trouve le terminal 10 à l'instant courant considéré.

Dans un créneau temporel dédié à un spot particulier, le signal émis par le satellite LEO 20 transmet les flux de données à destination des terminaux présents à l'intérieur du spot. La charge utile 22 du satellite LEO 20 génère un signal au format 5G NTN.

Selon le format 5G NTN, le signal est généré à partir des flux de trafic, correspondant aux données utilisateurs et à la signalisation 5G permettant l'accès au réseau aux terminaux présents dans le spot considéré.

Le signal est constitué d'une succession de trames (« Frame »), chaque trame étant elle-même constitué d'une succession de sous-trames (« sub-frame »).

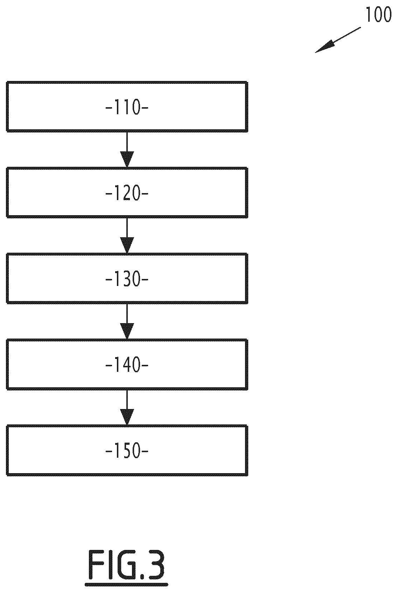

Par exemple, sur la figure 3, on a représenté schématiquement les trois premières sous-trames ST1, ST2 et ST3 d'une trame T.

Chaque sous-trame est une matrice fréquence - temps, subdivisée en une pluralité de cases dénommées éléments de ressource - RE (« ressource element »). Chaque élément de ressource est identifié par un indice en fréquence (correspondant à une fréquence de sous-porteuse) et un indice en temps (correspondant à un symbole).

NxM éléments de ressource - RE voisins (i.e. selon N indices en fréquence consécutifs et M indice en temps consécutifs) son regroupés pour former bloc radio physique - PRB (« Physical Radio Bloc »).

Ainsi, une sous-trame est subdivisée en une pluralité de PRB.

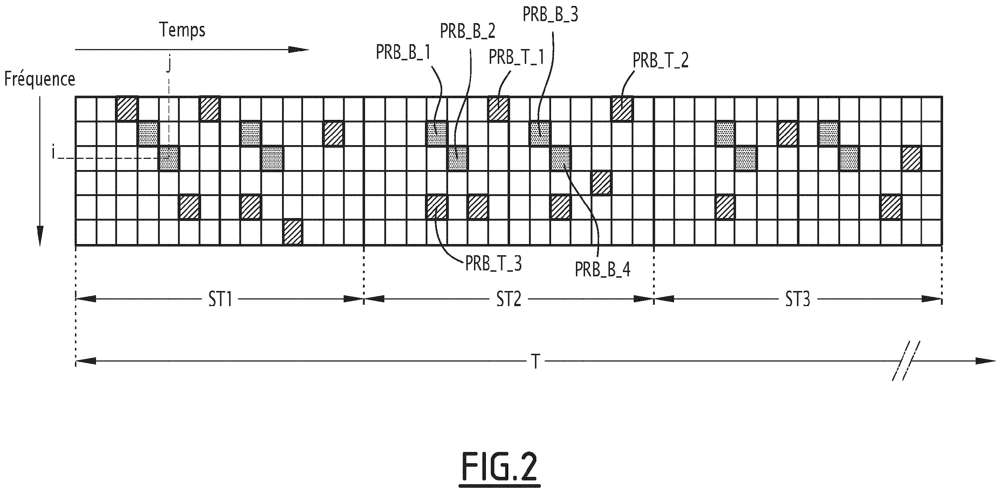

La couche MAC 44 alloue classiquement des PRB à chaque flux de trafic. Par exemple, sur la figure 2, les PRB_T_1, PRB_T_2, et PRB_T_3 de la seconde sous-trame ST2 comportent des données du flux de trafic, données utilisateur et/ou de signalisation.

Selon l'invention, la couche MAC 44 est configurée pour allouer un ou plusieurs PRB à un flux de balise délivré par le générateur de balise 48. Ces PRB sont dénommés PRB de balise dans ce qui suit. Par exemple, sur la figure 2, les PRB_B_1, PRB_B_2, PRB_B_3 et PRB_T_4 de la seconde sous-trame ST2 comporte des données du flux de balise.

Les PRB de balise ont des positions prédéfinies dans une sous-trames. Sur la figure 2, on constate que le motif des PRB n temps et en fréquence est répété d'une sous-trame à l'autre.

Ainsi, selon l'invention, la balise est directement intégrée dans le protocole de communication 5G NTN. La balise devient de ce fait intermittente pour chaque spot. Ce mécanisme est compatible de la mise en œuvre (optionnelle) d'une technique de beam-hopping par les satellites LEO.

Le générateur de balise 48 a ainsi pour fonction de générer le flux de balise.

Le flux de balise est élaboré à partir d'une donnée de référence, prédéfinie et unique. Par exemple la données de référence contient au moins une information parmi un identifiant de la constellation, un identifiant du satellite émetteur, et un 'identifiant du spot au sol éclairé par le satellite à l'instant courant.

On notera que lorsque la donnée de référence contient une information d'identification de la constellation, le positionnement des PRBs de balise dans la sous-trame peuvent être identique d'une constellation à l'autre au lieu d'être spécifique à chaque constellation. On notera que lorsque la donnée de référence contient une information d'identification d'un satellite de la constellation, le positionnement des PRBs de balise dans la sous-trame peuvent être identique d'un satellite à l'autre de la constellation au lieu d'être spécifique à chaque satellite de la constellation. On notera que lorsque la donnée de référence contient une information d'identification d'un spot au sol, le positionnement des PRBs de balise dans la sous-trame peuvent être identique d'un spot à l'autre (ou tout au moins entre un spot et un spot voisin) au lieu d'être spécifique à chaque spot au sol.

Dans une première variante, le flux de balise est consister de la donnée de référence répétée d'un PCB de balise à l'autre.

Cependant, de préférence, le flux de balise est élaboré à partir de la donnée de référence mais codée de manière différente d'une PCB de balise à l'autre. Le générateur de balise 48 exécute pour cela un algorithme de génération de flux, implémentant par exemple un code fontaine. Un tel algorithme constitue le meilleur mode de réalisation, mais d'autres types de génération de flux à partir d'une donnée sont envisageables par l'homme du métier.

Le générateur de balise 48 est vu comme un usager du trafic par la couche MAC 5G 44. Le générateur de balise 18 doit par conséquent indiquer la modulation et le codage à utiliser pour l'émission du flux de balise. Par exemple, le flux de balise est modulé et codé avec une modulation et un codage robuste et de préférence constant, typiquement QPSK ½. Ce codage est appliqué au niveau de la couche physique 42. Il est appliqué sur le flux de balise, c'est-à-dire en complément du code fontaine exécuté par le générateur de balise 48 sur la donnée de référence.

Le terminal SATCOM 10 comporte :
- une antenne avec positionneur (électronique ou mécanique) 60 ;
- une ACU 62, adaptée pour piloter l'antenne 60 de manière à orienter la direction de pointage D du faisceau d'émission/réception 61 de l'antenne 60 ;
- une chaine d'émission/réception 64, connectée à l'antenne 60 pour l'émission d'un flux de données vers un satellite LEO auquel le terminal 10 est connecté, et la réception d'un flux de données depuis ce satellite LEO ;
- une unité de positionnement par satellite 63, permettant de déterminer la position instantanée du terminal 10 et délivrer un signal d'horloge ; et,
- une application logicielle 65 de génération et de consommation de données applicatives, connectée à la chaine d'émission/réception 64.

Plus précisément, la chaine d'émission/réception 64 comporte, de manière classique, une couche physique 72, une couche MAC 74 et une couche RLC 76, de manière à implémenter les fonctions modem.

Selon l'invention, la chaine d'émission/réception 64 comporte en outre un récepteur de balise 78.

Le terminal 10 implémente ainsi une chaine de réception symétrique de la chaine d'émission de la charge utile d'un satellite de la constellation.

En réception, la couche physique 72 traite le signal reçu du satellite LEO et capté par l'antenne 60, de manière à en extraire les différents PRB et les transmettre à la couche MAC 74.

La couche physique 72 est avantageusement adaptée pour, dans une première phase de recherche du satellite 20, détecter les portions du signal reçu qui correspondent aux PRB de balise, ceux-ci étant organisés selon un motif régulier (en temps et en fréquence) connu en avance.

Pour cela, est évalué un indicateur de niveau de signal - RSSI sur le motif des PRB de balise. Cette première mesure du niveau d'énergie dans le signal reçu est facile et rapide à réalisée pour identifier la présence d'informations de balise dans un signal reçu, sans avoir à décoder le contenu des PRB de balise.

Cette première mesure est avantageusement horodatée et transmise à l'ACU 62.

La couche de contrôle d'accès au support - MAC (« Media Access Control ») 74 du terminal 10 identifie les PRB reçus selon qu'ils concernent un flux de trafic ou un flux de référence. L'identification des PRB de balise se fait en fonction de leur position (prédéfinie) dans la matrice temps-fréquence d'une sous-trame.

Les PRB du flux de trafic sont transmis à la couche RLC 76 qui extrait les données utilisateur et les transmet à l'application 68 destinataire.

Les PRB du flux de balise sont transmis au récepteur de balise 78.

La donnée binaire extraite d'un PRB de balise peut comporter un nombre élevé d'erreurs. Ce nombre d'erreurs sur la donnée binaire extraite est estimé à tout instant par le récepteur de balise 78 à partir de la donnée de référence qu'il connait par configuration préalable du terminal 10.

Avantageusement, en mettant en œuvre l'algorithme des codes fontaine, la réception du flux de balise dans les différents PRB de balise et son décodage par le récepteur de balise 78, permet de réduire le nombre d'erreurs binaires sur la donnée binaire extraite.

Lorsque l'ensemble des PRB de balise d'une trame a été reçu, le récepteur de balise 78 est en mesure de définir un estimé du rapport signal à bruit - SNR (« Signal Noise Ratio ») de la balise à partir des erreurs résiduelles.

Avantageusement, un niveau bas du SNR (par exemple inférieur à un seuil prédéfini) permet de confirmer l'identité du satellite dont les flux de balise est capté (corrélation entre la données de référence caractéristique du satellite de la constellation sélectionné et la données binaire extraite).

Ce rapport signal à bruit de balise est alors horodaté, avec par exemple la date fournie par l'unité 36, et transmit à l'ACU 62 de pilotage de l'antenne 60, en tant que seconde mesure.

L'ACU 62 est adaptée pour tenir compte de la grandeur de rétroaction que constitue la première mesure ou la seconde mesure pour piloter l'orientation du faisceau d'antenne. La première mesure de RSSI est par exemple utilisée lors de la recherche d'un satellite cible. Cette mesure est rapide à obtenir, mais manque de précision. Elle peut causer des confusions entre satellites. La seconde mesure de SNR est par exemple utilisée pour la poursuite du satellite afin de maintenir le pointage dans les conditions dynamique du satellite et/ou du terminal. Une optimisation du pointage avant établissement d'un lien de communication avec le satellite cible, peut utiliser l'une et/ou l'autre des première et seconde mesures.

La figure 3 présente un mode de réalisation possible d'un procédé de pilotage automatique de l'antenne d'un terminal SATCOM au cours de l'utilisation de ce dernier.

Le procédé 100 débute par une étape de sélection, par le terminal 10, d'un satellite de la constellation, à partir par exemple d'un fichier d'éphémérides des satellites de la constellation. Par exemple le satellite 20 est sélectionné.

Dans la phase suivante de recherche du satellite 20, l'ACU 62 estime (étape 120), conformément à l'état de la technique, la position approximative et l'heure d'apparition du satellite 20.

Quelques secondes avant l'apparition du satellite 20 au-dessus de l'horizon, l'ACU 62 pointe (étape 130) le faisceau 61 de l'antenne vers la position attendue.

Dans l'étape 140 suivante, le terminal 10 cherche le satellite 30.

Lorsque le satellite 30 émet dans le spot dans lequel se trouve le terminal 10, la chaine de réception 64 du terminal 10 reçoit le signal émis par le satellite avec suffisamment d'énergie pour pouvoir effectuer une premier mesure du type indicateur de niveau du signal reçu - RSSI (« Received Signal Strength Indicator ») pendant le créneau temporel d'émission du satellite.

Dans cette étape, il n'est pas nécessaire d'avoir une mesure précise du RSSI. Cette première mesure peut se faire par filtrage numérique (moyenne) du signal reçu dans le canal de balise, i.e. les PCB de balise associés à la donnée de référence.

Cette première mesure RSSI, une fois datée, est transmise à l'ACU 62.

En absence du satellite LEO, le RSSI est normalement nul (RSSI=0). Toute orientation de l'antenne donnant une variation positive du RSSI est alors retenue comme possible direction où se trouve le satellite cible.

Par des petits déplacements de la direction de pointage de l'antenne, l'ACU 62 essaie de maximiser la première mesure RSSI.

Une fois le satellite 20 accroché, dans une étape 140, le récepteur 78 du terminal 10 confirme si le signal reçu appartient effectivement au satellite cible.

Dans la négative la procédure de recherche d'un satellite doit être reprise.

Dans l'affirmative, une procédure classique d'établissement d'un canal de communication bidirectionnel entre le satellite et le réseau de télécommunication cellulaire est effectuée pour établir une liaison Uu selon le standard 5G.

Le procédé 100 passe alors dans une étape 150 de poursuite du satellite 20.

Dans cette étape, le récepteur 78 du terminal 10 décode la donnée de référence et estime une seconde mesure du type rapport signal à bruit - SNR de balise.

Il est possible que la modulation, le codage et la transmission de la donnée de référence dans un unique PRB de balise ne permettent pas au terminal récepteur d'estimer correctement le SNR de manière fiable.

Afin que le terminal récepteur puisse recevoir la donnée de référence avec suffisamment d'énergie, le satellite 20 utilise avantageusement un code fontaine pour transformer la donnée de référence en un flux d'informations binaires, transmit sur plusieurs PRB de balise.

La durée du flux de balise permet alors d'accroitre le niveau de redondance sur l'information transmise et par conséquent d'augmenter l'énergie de l'information transmise (notion d'énergie par bit ou « Energy per bit »).

Avec cette nouvelle approche, le terminal 10 est en mesure d'estimer à chaque période d'éclairage du satellite une valeur de SNR de balise avec une grande précision.

Le SNR de balise daté est communiqué à l'ACU 62 pour asservir l'orientation du faisceau 61 de l'antenne vers le satellite 20.

L'étape 150 est itérée tant que le terminal 10 est en liaison avec le satellite 20 et prend fin lorsque le satellite 20 n'est plus en visibilité du terminal 10 ou que le terminal 10 décide d'établir une liaison avec un autre satellite de la constellation, notamment un satellite offrant une meilleure qualité de service.

Avantageusement, le nombre de PRB de balise à placer dans une sous-trame est défini dynamiquement par le satellite, en fonction de l'énergie minimum que doit recevoir un terminal SATCOM situé à l'intérieur d'un spot donné du domaine géographique éclairé par le satellite, pour que ce terminal puisse extraire la donnée de référence en un temps prédéfini.

Cette énergie minimum s'accroit quasiment linéairement avec le nombre de PRB.

Le nombre de PRB de balise à transmettre pour atteindre une valeur cible de SNR de balise dans le créneau temporel pendant lequel un terminal reçoit le faisceau du satellite est représentatif de la performance attendue en pointage.

Une valeur typique de précision de pointage est donnée par une erreur de pointage de l'antenne inférieure à 0,5°. Elle est fonction de la taille de l'antenne.

Le procédé de planification 200 est exécuté sur un calculateur de planification, hors ligne, en configuration de la mission. Le procédé 200 comporte les étapes suivantes, pour chaque spot de la couverture du satellite :
Dans une étape 210, la valeur cible de SNR de balise est calculée, compte tenu de l'erreur de pointage maximum tolérée, de la périodicité de répétition du motif PRB, optionnellement du cycle de beam-hopping et avantageusement d'autre facteurs, comme le gain de l'antenne (ou plus proprement du facteur de mérite G/T).

Dans une étape 220, le nombre de PRB de balise nécessaire pour atteindre la valeur cible de SNR est calculé, par exemple en tenant compte du bilan de liaison estimé entre le satellite et un terminal nominal situé dans le spot considéré, et du choix de la modulation et du codage réalisés par la couche physique de la charge utile du satellite.

Ce bilan de liaison est pris dans la configuration la moins favorable, c'est-à-dire lorsque l'élévation du satellite au-dessus de l'horizon est faible : l'atténuation à travers la couche atmosphérique est alors la plus grande et la distance entre le satellite et un terminal potentiel est maximum.

Le nombre de PRB nécessaires étant déterminé, dans une étape 230, les PRB de balise sont pré-positionnés dans la matrice temps-fréquence afin que l'allocateur de PRB de la couche MAC ne les utilise pas pour le flux de trafic.

De préférence, ces PRB de balise sont positionnés de manière régulière selon la direction temporelle pour que les terminaux puissent lisser leur charge de calcul liée à la démodulation du flux de balise par exécution de l'algorithme de codes fontaine.

De préférence, les PRB de balises sont réparties sur différentes sous-porteuses, afin de ne pas introduire de biais si une ou plusieurs fréquences voient leur propagation dégradée par rapport à la moyenne.

Dans une étape 240, l'allocation des PRB de balise est diffusée aux terminaux SATCOM, via un support externe ou via un réseau terrestre, si ces terminaux peuvent s'y raccorder.

Cette même allocation des PRB de balise est transmise aux satellites de la constellation, avec une date effective de début d'utilisation de cette allocation des PRB de balise par les charges utiles.

La présente invention consiste à intégrer une balise sous la forme d'un ensemble de PRB directement dans le protocole de transmission de la 5G NTN.

L'utilisation d'un code fontaine permet d'accroitre l'énergie du signal de cette balise et par conséquent la précision du pointage.

La balise peut être émise et reçue de manière intermittente, ce qui permet éventuellement de mettre en œuvre de manière transparente un fonctionnement beam-hopping des terminaux/satellites.

## Revendications

1. Procédé de pointage (100) d'un terminal SATCOM (10) vers un satellite défilant (20) embarquant une charge utile (22) régénérative, dans un réseau de communication cellulaire du type 5G NTN, comportant les étapes consistant à :
- générer, par la charge utile (22), un flux de balise à partir d'une donnée de référence partagée avec le terminal SATCOM (10) ;
- transmettre un signal au format 5G NTN, par la charge utile (22), en intégrant le flux de balise dans au moins un bloc radio physique dit de balise d'une sous-trame du signal selon un motif temps-fréquence prédéfini ;
- réception du signal par le terminal SATCOM (10) ;
- extraction, par le terminal SATCOM, des blocs radio physiques de balise contenu dans chaque sous-trame du signal reçu ;
- réalisation d'une mesure instantanée à partir des blocs radio physiques de balise ; et,
- orientation d'un faisceau d'une antenne du terminal SATCOM en tenant compte de la mesure instantanée.

2. Procédé selon la revendication 1, dans lequel le flux de balise est constitué d'une répétition de la donnée de référence.

3. Procédé selon la revendication 1, dans lequel le flux de balise est généré par un générateur de balise (48) de la charge utile (22) du satellite défilant en appliquant un algorithme du type code fontaine à la donnée de référence.

4. Procédé selon l'une quelconque des revendications 1 à 3, comportant une étape consistant à évaluer, par le terminal SATCOM, un indicateur de niveau de signal à partir des blocs radio physiques de balise en tant que mesure instantanée utilisée pour l'orientation du faisceau de l'antenne du terminal.

5. Procédé selon l'une quelconque des revendication 1 à 4, comportant les étapes consistant à :
- calculer une estimation de la données de référence à partir des données binaires extraites des blocs radio physiques de balise ;
- calculer une erreur entre l'estimation de la données de référence et la donnée de référence en tant que mesure instantanée utilisée pour l'orientation du faisceau de l'antenne du terminal.

6. Procédé selon la revendication 5, dans lequel l'erreur est un rapport signal à bruit.

7. Procédé selon la revendication 5 ou la revendication 6, dans lequel l'erreur est utilisée pour vérifier une identité du satellite défilant (20).

8. Charge utile (22) régénérative d'un satellite défilant d'un réseau de communication cellulaire du type 5G NTN, adapté pour générer un signal au format 5G NTN comportant une pluralité de sous-trames, chaque sous trame étant composée d'un motif temps-fréquence d'une pluralité de blocs radio physiques, au moins un bloc radio physique d'une sous-trame, en une position prédéfinie, étant réservé pour la transmission d'un flux de balise, la charge utile comportant un générateur de balise (48) propre à générer le flux de balise à partir d'une donnée de référence et à appliquer le flux de balise généré en entrée d'une couche de contrôle d'accès au support (44) de la charge utile, le générateur de balise indiquant une modulation et un codage à utiliser pour l'émission du flux de balise.

9. Charge utile selon la revendication 8, dans lequel le flux de balise est modulé et codé selon un codage robuste.

10. Terminal SATCOM (10), apte à fonctionner sur un réseau de communication cellulaire du type 5G NTN, **caractérisé en ce qu'**il est adapté pour piloter une antenne (60) du terminal SATCOM en réalisant une mesure instantanée à partir des blocs radio physiques d'un signal au format 5G NTN comportant une pluralité de sous-trames, chaque sous trame étant composée d'un motif temps-fréquence d'une pluralité de blocs radio physiques, au moins un bloc radio physique d'une sous-trame, en une position prédéfinie, étant réservé pour la transmission d'un flux de balise.

11. Terminal SATCOM selon la revendication 10, comportant un récepteur de balise (78) adapté pour calculer une estimation de la donnée de référence à partir des données binaires extraites des blocs radio physiques de balise portant le flux de balise et calculer une erreur entre l'estimation de la données de référence et la donnée de référence en tant que seconde mesure instantanée, et à appliquer ladite seconde mesure instantanée en entrée d'une unité (62) de pilotage de l'antenne (60) du terminal SATCOM (10).

12. Terminal SATCOM selon revendication 11, dans lequel le récepteur de balise (78) exécute un algorithme du type code fontaine pour calculer une estimation de la donnée de référence.

13. Terminal SATCOM selon l'une quelconque des revendications 10 à 12, comportant une couche physique (72) adaptée pour évaluer un indicateur instantané de niveau de signal à partir des blocs radio physiques portant le flux de balise en tant que première mesure instantanée et à appliquer ladite première mesure instantanée en entrée de l'unité (62) de pilotage de l'antenne (60).
